Europäisches Patentamt

European Patent Office

Office européen des brevets

(19)

(11) Numéro de publication : **0 133 402 B1**

(12) **FASCICULE DE BREVET EUROPÉEN**

(45) Date de publication du fascicule du brevet :
30.09.87

(51) Int. Cl.⁴ : **A 23 C 19/084**

(21) Numéro de dépôt : **84401576.8**

(22) Date de dépôt : **26.07.84**

(54) **Procédé de fabrication d'un fromage fondu affiné.**

(30) Priorité : 03.08.83 FR 8312818

(43) Date de publication de la demande :
20.02.85 Bulletin 85/08

(45) Mention de la délivrance du brevet :
30.09.87 Bulletin 87/40

(84) Etats contractants désignés :
**AT BE CH DE FR GB IT LI LU NL SE**

(56) Documents cités :
EP-A- 0 033 635
DE-B- 1 205 804
DE-C- 831 494
FR-A- 1 044 183
FR-A- 1 044 183
FR-A- 1 337 214
FR-A- 2 188 959
FR-A- 2 298 956
FR-A- 2 504 781
FR-E- 82 926
US-A- 2 148 593

(73) Titulaire : **FROMAGERIES BEL**
**4, rue d'Anjou**
**F-75008 Paris (FR)**

(72) Inventeur : **Daurelles, Jacques**
**Les Persanges St Didier**
**39000 Lons Le Saunier (FR)**
Inventeur : **Lombart, Christian**
**Le Gué du Loir Nazangé**
**41100 Vendome (FR)**

(74) Mandataire : **Bressand, Georges et al**
**c/o CABINET LAVOIX 2 Place d'Estienne d'Orves**
**F-75441 Paris Cedex 09 (FR)**

EP 0 133 402 B1

Jouve, 18, rue St-Denis, 75001 Paris, France

## Description

La présente invention concerne un nouveau procédé de fabrication d'un fromage fondu affiné.

D'une façon plus spécifique, la présente invention concerne la fabrication de fromage fondu ou de spécialités fromagères fondues ayant l'aspect d'une pâte molle ou d'une pâte pressée à croûte moisie et ayant une stabilité de conservation supérieure à 7 semaines dans les conditions normales. Elle concerne également la fabrication de fromages mixtes contenant des éléments distincts, tels que des fromages naturels.

On a déjà proposé dans la littérature des procédés de fabrication de tels produits qui allient la présentation, le goût et la texture attrayantes et traditionnelles des fromages à pâte molle ou à pâte pressée appréciés des consommateurs et la conservation des fromages fondus.

Ainsi, le brevet FR-2 188 959 décrit la préparation d'un fromage de type fondu, qui consiste essentiellement à incorporer dans une formule de fromage fondu de base environ 15 % en poids de fromage blanc caillé et à soumettre le fromage fondu après refroidissement à un affinage par ensemencement et prolifération sur sa surface de moisissures superficielles jusqu'à formation d'une croûte.

Ce procédé présente des inconvénients au niveau du développement de la moisissure, du goût et de la texture du fromage obtenu. En effet, la moisissure est ensemencée sur un milieu protéique déjà fortement dégradé et par action protéolytique et lypolytique des enzymes qu'elle sécrète, elle entraîne très vite des goûts amers et rances.

En outre, le produit obtenu du fait des matières premières employées dans la masse fondue ne présente pas la texture onctueuse traditionnelle des fromages à pâte molle.

La demande de brevet européen EP-A-0 033 635 décrit un procédé permettant d'obtenir un fromage se rapprochant du fromage à pâte molle que l'on veut imiter et d'éviter l'action enzymatique de la moisissure.

Ce procédé utilise pour la fonte le fromage à pâte molle traditionnel qu'il veut « imiter ». Une barrière artificielle est appliquée à la surface du fromage fondu avant l'application de la moisissure afin que les enzymes sécrétées par cette dernière ne pénètrent pas dans le fromage fondu et ne dégradent pas les composants de ce dernier, déjà dégradés au cours de l'affinage du fromage de base utilisé. La barrière est obtenue par vaporisation à la surface du fromage fondu de composés chimiques qui sont capables de réagir avec le calcium présent dans le fromage fondu, tels que des alginates de sodium ou des carraghénates de potassium en formant par interaction avec le calcium une « barrière » imperméable à la surface.

La Demanderesse a découvert qu'il n'était pas indispensable de former une « barrière imperméable » entre le fromage fondu et les moisissures pour éviter le développement de mauvais goût et de mauvaises odeurs dus à un suraffinage, correspondant à un affinage de pâtes déjà dégradées.

De plus, dans le cas des produits fabriqués selon les brevets cités ci-dessus, le fromage fondu obtenu a une texture molle et les opérations ultérieures de vaporisation de la moisissure et de retournement au cours de l'affinage sont difficilement mécanisables.

La Demanderesse a mis au point un traitement du fromage fondu qui permet en outre de rendre le processus mécanisable et donc moins onéreux.

Le procédé mis au point par la Demanderesse permet d'obtenir un produit final semblable à un fromage à pâte molle ou à pâte pressée aussi bien au point de vue du goût que du point de vue de la texture et qui présente une conservation beaucoup plus longue que le fromage « naturel » correspondant, en évitant les inconvénients des procédés déjà décrits. De plus, le procédé permet la fabrication de fromages composites comprenant l'inclusion d'autres éléments.

La technique antérieure est en outre illustrée par DE-C-831 494 qui décrit un procédé dans lequel on arrête le développement de la flore superficielle d'un fromage traditionnel et on réensemence la surface avec une autre flore. Dans ce procédé on détruit la flore superficielle par des bains acides ou basiques. Ce document mentionne incidemment la possibilité d'ajuster le pH à la surface du fromage avant l'ensemencement par une nouvelle culture.

Par ailleurs FR-A-1 337 214 décrit l'introduction de ferments lactiques dans la masse d'un fromage fondu, ce dernier étant exclusivement préparé à partir de caillé frais ; il s'agit en l'occurrence de fabriquer un fromage fondu à goût lactique. Il ne s'agit en aucun cas d'un ensemencement superficiel.

La présente invention a pour objet un procédé de fabrication d'un fromage fondu affiné ayant l'aspect et les propriétés organoleptiques d'un fromage à pâte molle ou à pâte pressée et à croûte moisie, par formation d'un bloc de fromage à partir d'une masse fondue, ensemencement de la surface du bloc de fromage avec des moisissures d'affinage et affinage du fromage ainsi ensemencé, caractérisé en ce qu'on choisit les constituants utilisés pour former la masse fondue de façon à ce que cette masse fondue ait une composition et un état proches de ceux d'un coagulum destiné à être transformé en ledit fromage à pâte molle ou à pâte pressée et en ce que préalablement à l'ensemencement par les moisissures on effectue un traitement d'acidification superficielle du bloc de fromage jusqu'à un pH de 4 à 5, conduisant à la formation d'une pré-croûte qui facilite les manipulations ultérieures.

Le traitement d'acidification conduit à la formation d'une « pré-croûte » par floculation des protéines de surface et permet à la fois de faciliter la mécanisation du procédé, d'abaisser le pH du

fromage fondu en rapprochant ce pH de celui d'un coagulum normalement utilisé pour la fabrication d'un fromage à pâte molle ou à pâte pressée et de favoriser la fixation et le développement des moisissures, tout en empêchant une trop forte dégradation lipolytique et protéolytique du fromage fondu sous l'action des moisissures d'affinage.

Le traitement d'acidification superficielle peut être effectué à l'aide de ferments acidifiants, notamment de ferments lactiques, ou à l'aide d'un agent acidifiant tel que l'acide lactique ou l'acide citrique.

Le traitement par les ferments acidifiants peut être effectué par pulvérisation avec une suspension aqueuse des ferments et on laisse l'acidification se poursuivre jusqu'à obtention du pH souhaité en surface.

Le traitement par les agents acidifiants tels que l'acide lactique peut être effectué par pulvérisation avec une solution aqueuse de l'agent acidifiant ou par trempage dans cette solution. Les temps de contact sont réglés de façon à obtenir le pH souhaité. Le bloc de fromage est ensuite avantageusement égoutté à une température d'environ 20 °C pendant quelques heures.

Dans ce traitement, on abaisse avantageusement le pH jusqu'à une valeur comprise entre 4 et 5, de préférence de 4,5 à 4,6.

Pour se rapprocher de la composition du coagulum, on ajoute avantageusement aux produits utilisés pour préparer la masse fondue de la caséine à raison d'au moins 2 % par rapport au poids de la masse fondue. Cette caséine peut être ajoutée sous forme de caséine ou de caséinate.

En pratique, on peut obtenir selon la présente invention par le choix judicieux des matières premières (ainsi que par la durée d'affinage) l'équivalent d'un fromage à pâte pressée ou d'un fromage à pâte molle.

En particulier, pour l'équivalent d'un fromage à pâte pressée, l'extrait sec est choisi de façon à être au moins égal à 60 % en poids.

Selon un premier mode de réalisation, on prépare la masse fondue selon une technologie traditionnelle en utilisant comme matières premières de base au moins un fromage traditionnel à pâte pressée, de la caséine et/ou des caséinates, et un agent technologique de fonte, notamment des phosphates, polyphosphates et citrates de sodium. On peut éventuellement ajouter des matières grasses, de préférence butyriques et des concentrés protéiques.

La proportion relative de fromages et de caséine-caséinates et de concentrés est avantageusement choisie de telle façon que le fromage fondu obtenu n'ait pas une texture « cassante » et qu'il ait une proportion suffisante de caséine à l'état non dégradé, de façon à ce que l'état des composants de cette masse fondue soit proche de celle d'un coagulum frais destiné à être transformé en fromage à pâte molle ou à pâte pressée traditionnelle.

Selon un autre mode de réalisation de l'invention, on prépare une masse fondue selon une technologie spéciale caractérisée en ce que les matières premières destinées à être fondues sont spécialement choisies pour pouvoir fondre en une masse homogène sans utiliser des agents technologiques de fonte traditionnels. A cet effet, on fait fondre un mélange de caillé lactique frais, de caséine et/ou de caséinate, et éventuellement des concentrés protéiques, des laits partiellement ou totalement déminéralisés, et des matières grasses de préférence butyriques.

On utilise préférentiellement ce mode de réalisation car, outre son avantage économique, la majeure partie des produits utilisés permet d'obtenir une masse fondue dont la caséine est peu dégradée et se rapproche de celle d'un coagulum frais destiné à être transformé en pâte molle ou pâte pressée traditionnelle.

Dans les deux cas, on ajoute avantageusement au mélange du sel de cuisine. On peut ajouter si nécessaire un agent acidifiant de façon à obtenir un pH relativement bas se rapprochant de celui d'un coagulum lactique. Le pH de la masse fondue est avantageusement de 5,3 à 6.

La fonte peut être effectuée dans un échangeur de chaleur traditionnellement utilisé en technologie de fonte dans une gamme de température allant de 90 à 120 °C pendant 1 à 5 minutes.

Après moulage sous forme de blocs et traitement superficiel d'acidification, la surface des blocs est ensemencée par des moisissures d'affinage telles que celles utilisées classiquement pour l'affinage des fromages.

Les souches utilisées sont choisies pour leurs propriétés enzymatiques lypolytiques et protéolytiques spéciales et leur développement ne conduit pas à la formation de composés amers et rances traditionnels, tout en conférant à la superficie du fromage un « duvet moisi » très caractéristique des pâtes moisies. On peut utiliser à cet effet Penicillium Candidum. D'autres souches de Penicillium ainsi que Brevibacterium linens peuvent également être utilisées.

Après ensemencement, les blocs de fromage sont mis pendant 6 à 10 jours dans un haloir dans des conditions de température et d'hygrométrie favorables au développement de la flore de surface. La température choisie se situe aux alentours de 10-14 °C et l'hygrométrie aux alentours de 85-98 %.

Après cette période d'affinage, le fromage est conditionné. Contrairement à une pâte molle traditionnelle qui a une durée de conservation de 5 semaines environ, ce fromage a une durée de conservation supérieure à 7 semaines.

Un moyen avantageux de stopper le développement ultérieur de la moisissure qui risque d'entraîner des goûts amers est de traiter les fromages par micro-ondes ou rayons ionisants.

Le fromage obtenu peut, bien entendu, être de n'importe quelle forme (cylindrique, cubique, conique, parallélépipédique, sphérique, etc.) et de n'importe quelle taille, de celle d'une bouchée par exemple à celle d'une tomme.

On peut également, au moment de la fonte, ajouter des éléments distincts dans la masse, tels que du poivre, des fines herbes, des épices, aromates, etc.

On peut, en outre, fabriquer un fromage mixte qui est un mélange de fromages fondus avec des inclusions de fromages naturels de toutes formes.

Dans ce cas, on forme un bloc de fromage par superposition dans un moule de couches de fromage fondu chaud et d'éléments de fromage naturel et on laisse refroidir le bloc. On soumet ensuite le bloc au traitement d'acidification, on pulvérise les moisissures d'affinage notamment Penicillium Candidum et on procède à l'affinage.

Une présentation avantageuse consiste à inclure des tranches de fromage naturel, fromage bleu en particulier, dans une masse fondue.

La présente invention sera maintenant décrite à l'aide des exemples suivants.

Exemple 1

On prépare un mélange de Cheddar, de Gouda, de Caséinate, de lait en poudre, de sel de cuisine et de sels de fonte selon les proportions suivantes :

| | | |
|---|---|---|
| Cheddar | 42 | % en poids (à sec) |
| Gouda | 25 | % en poids (à sec) |
| Caséinate | 5 | % en poids (à sec) |
| Lait | 6 | % en poids (à sec) |
| NaCl | 0,5 | % en poids (à sec) |
| Sels de fonte (poly phosphate de sodium) | 2,5 | % en poids (à sec) |

de façon à obtenir après fusion à 110 °C un mélange dont l'extrait sec et la teneur en matière grasse est celle d'une pâte pressée, genre Tomme, soit :

| | |
|---|---|
| Matière grasse | 45 % (sur ES) |
| Extrait sec | 60 % |

On fait fondre le tout à 110 °C pendant 2 minutes environ. Le pH de la masse fondue est de 5,5. On refroidit à 85 °C et on coule le mélange chaud et fondu dans des moules ayant la dimension de celle du fromage désiré. On laisse refroidir 4 à 48 heures afin d'obtenir une texture assez dure et on démoule.

On trempe alors le fromage dans une solution mixte d'acide lactique (100 g/l) et d'acide citrique (50 g/l) pendant 5 minutes afin de l'amener à un pH égal à 4,6. On laisse égoutter pendant 1 heure à 20 °C.

On pulvérise sur la surface des fromages une suspension de spores de Penicillium Candidum à propriétés enzymatiques spéciales et on laisse affiner pendant 9 jours dans un haloir à 92 % d'hygrométrie et à 12 °C et un jour dans un haloir à 92 % d'hygrométrie à 14 °C. Pendant toute cette période, le fromage fait l'objet de soins intensifs en cave.

Au bout de cette période, le développement de la flore est stoppé par passage du fromage dans un four à micro-ondes pendant 30 secondes.

Le produit ayant l'aspect extérieur d'une pâte dure (présence d'un duvet blanc) est alors conditionné et mis à la vente. La conservation de ce produit est de 6 mois.

Exemple 2

On sélectionne un mélange de coagulum frais gras, de crème, de caséinate de sodium, de poudre de lait, de sel de cuisine et de citrates selon les proportions suivantes :

| | | |
|---|---|---|
| Caillé gras | 60 | % en poids (à sec) |
| Crème | 18 | % en poids (à sec) |
| Caséinate | 3,5 | % en poids (à sec) |
| Poudre de lait écrémé | 6 | % en poids (à sec) |
| NaCl | 1 | % en poids (à sec) |
| Citrate | 0,5 | % en poids (à sec) |

de façon à obtenir un mélange dont l'extrait sec et la teneur en matière grasse sont ceux d'une pâte molle riche en graisse, genre Camembert, à savoir :

| | |
|---|---|
| Matière grasse | 70 % |
| ES | 50 % |

On chauffe le tout à 100 °C pendant une minute. Le pH est de 5,3. On laisse refroidir jusqu'à 80 °C. On coule alors le mélange chaud et fondu dans des moules de format type Camembert. On laisse refroidir pendant 6 à 48 heures afin d'obtenir une texture assez dure du fromage.

On pulvérise sur les faces extérieures du fromage une suspension de ferments lactiques à 2 %, on laisse acidifier pendant un temps allant de 2 à 6 heures jusqu'à obtention d'un pH 4,6 en surface.

On pulvérise alors sur le fromage une suspension de spores de Penicillium Candidum ayant une concentration en spores de $10^5$ à $10^7$ spores/ml.

On place le fromage dans un haloir dont les conditions d'hygrométrie et de température sont respectivement de 95 % et 14 °C.

On laisse affiner le fromage pendant 8 jours tout en le soumettant pendant cette période à des soins intensifs de cave (retournement, etc.)

On stoppe le développement de Penicillium par passage dans un four à micro-ondes selon les conditions précédentes.

On conditionne le fromage et on le met à la vente.

Le produit a alors une durée de conservation de 6 mois.

Exemple 3

On part d'un fromage fondu crémeux analogue à celui utilisé à l'exemple 1 (ayant un extrait sec d'environ 60 % en poids et un rapport matière grasse/extrait sec d'environ 45 % en poids) et d'un fromage bleu fabriqué à partir de lait pasteurisé ayant un extrait sec de 50 % en poids.

On coule le fromage fondu dans un moule en aluminium ou en plastique à une température comprise entre 80 et 95 °C et on dispose successivement entre les couches de fromage fondu des tranches de fromage bleu préalablement découpé et écroûté. On termine par une couche supérieure de fromage fondu.

Une fois le moule rempli, on le ferme et on laisse refroidir l'ensemble d'abord à température ordinaire, puis au froid à 5 °C.

Les fromages sont démoulés le lendemain et soumis à un traitement d'acidification comme à l'exemple 1.

On pulvérise ensuite sur toutes les faces une suspension de spores de Penicillium Candidum. Les fromages sont mis en haloir à une température de 12-14 °C, à une hygrométrie de 90 % pendant 6 à 8 jours et conditionnés en vue de la vente. Le développement du Penicillium leur confère un aspect de fromages à croûte moisie.

## Revendications

1. Procédé de fabrication d'un fromage fondu affiné ayant l'aspect et les propriétés organoleptiques d'un fromage à pâte molle ou à pâte pressée et à croûte moisie, par formation d'un bloc de fromage à partir d'une masse fondue, ensemencement de la surface du bloc de fromage avec des moisissures d'affinage et affinage du fromage ainsi ensemencé, caractérisé en ce qu'on choisit les constituants utilisés pour former la masse fondue de façon à ce que cette masse fondue ait une composition et un état proches de ceux d'un coagulum destiné à être transformé en ledit fromage à pâte molle ou à pâte pressée et en ce que préalablement à l'ensemencement par les moisissures on effectue un traitement d'acidification superficielle du bloc de fromage jusqu'à un pH de 4 à 5, conduisant à la formation d'une pré-croûte qui facilite les manipulations ultérieures.

2. Procédé selon la revendication 1, caractérisé en ce qu'on ajoute aux produits utilisés pour préparer la masse fondue de la caséine (sous forme de caséine ou de caséinate) à raison d'au moins 2 % par rapport au poids de la masse fondue.

3. Procédé selon l'une quelconque des revendications 1 et 2, caractérisé en ce que la masse fondue est préparée selon une technologie de fonte traditionnelle, en utilisant comme matières premières au moins un fromage à pâte pressée, de la caséine et/ou des caséinates et un agent technologique de fonte.

4. Procédé selon l'une quelconque des revendications 1 et 2, caractérisé en ce que la masse fondue est préparée selon une technologie de fonte spécifique en utilisant comme matières premières un caillé lactique frais, de la caséine et/ou des caséinates.

5. Procédé selon l'une quelconque des revendications 1 à 4, caractérisé en ce que dans le traitement d'acidification on abaisse le pH jusqu'à une valeur comprise entre 4,5 à 4,6.

6. Procédé selon l'une quelconque des revendications 1 à 5, caractérisé en ce que l'on utilise comme moisissures d'affinage des souches de Penicillium.

7. Procédé selon la revendication 6, caractérisé en ce que l'on utilise une souche de Penicillium Candidum.

8. Procédé selon l'une quelconque des revendications 1 à 7, caractérisé en ce que l'on forme un bloc de fromage par superposition dans un moule de couches de fromage fondu chaud et d'éléments d'au moins un fromage naturel.

9. Procédé selon l'une quelconque des revendications 1 à 8, caractérisé en ce que lors de l'affinage on effectue mécaniquement les retournements.

10. Procédé selon l'une quelconque des revendications 1 à 9, caractérisé en ce que le produit est traité par micro-ondes ou rayons ionisants après affinage.

## Claims

1. Process for the preparation of ripened process cheese having the appearance and the organoleptic properties of a soft or hard or semi-hard cheese with a moldy rind, which involves forming a cheese block from a cheese melt, seeding the surface of the cheese block with ripening molds, and ripening the thus seeded cheese, characterized in that the components used to form the melt are selected so that this melt exhibits a composition and a condition close to those of a coagulum meant to be converted into a soft or hard or semi-hard cheese and prior to the seeding with the molds the cheese block is submitted to a surface acidification treatment up to a pH of 4 to 5, inducing the formation of a pre-rind which facilitates the subsequent handlings.

2. Process as claimed in claim 1, characterized in that casein (as caseine or caseinate) is added to the ingredients used to prepare the melt, in an amount of at least 2 % by weight of the melt.

3. Process as claimed in claim 1 or 2, characterized in that melt is prepared according to a conventional melting technology, using as raw materials at least a hard or semi-hard cheese, casein and/or caseinates and a technological melting agent.

4. Process as claimed in claim 1 or 2, characterized in that melt is prepared according to a specific melting technology, using as raw materials a fresh lactic curd, casein and/or caseinates.

5. Process as claimed in any one of claims 1 to 4, characterized in that in the acidification treatment the pH is lowered up to a value of 4.5 to 4.6.

6. Process as claimed in any one of claims 1 to 5, characterized in that Penicillium strains are used as ripening molds.

7. Process as claimed in claim 6, characterized in that a Penicillium Candidum strain is used.

8. Process as claimed any one of claim 1 to 7, characterized in that a cheese block is formed by superimposition in a mold of layers of hot cheese melt and portions of at least one natural cheese.

9. Process as claimed in any one of claims 1 to 8, characterized in that mechanical turnings are carried out during the ripening procedure.

10. Process as claimed any claims 1 to 9, characterized in that subsequent to the ripening procedure, the product is submitted to a microwave or ionizing radiation treatment.

**Patentansprüche**

1. Verfahren zur Herstellung von gereiftem Schmelzkäse mit dem Aussehen und den organoleptischen Eigenschaften eines Weich- oder Hartkäses mit Schimmelrinde, wobei ein Käseblock aus einer Schmelzmasse gebildet wird, in dessen Oberfläche Schimmelpilze zur Reifung eingeimpft werden und der so mit Schimmelpilzen geimpfte Käse gereift wird, dadurch gekennzeichnet, daß die zur Bildung der Schmelzmasse verwendeten Zutaten so gewählt werden, daß diese Schmelzmasse eine Zusammensetzung und Beschaffenheit ähnlich der eines Koagulierungsmittels aufweist, welches in den Weich- oder Hartkäse umgewandelt wird, und daß vor dem Einimpfen der Schimmelpilze die Oberfläche des Käseblocks zur Bildung einer die weiteren Bearbeitungsschritte erleichternden Vorrinde einer Säurebildungsbehandlung bis zu einem pH-Wert von 4 bis 5 unterzogen wird.

2. Verfahren nach Anspruch 1, dadurch gekennzeichnet, daß den zur Behandlung der Schmelzmasse verwendeten Produkten ein Anteil von mindestens 2 % Kasein (in Form von Kasein oder Kaseinat) im Verhältnis zu dem Gewicht der Schmelzmasse beigefügt werden.

3. Verfahren nach einem der Ansprüche 1 und 2, dadurch gekennzeichnet, daß die Schmelzmasse nach einer herkömmlichen Schmelztechnologie zubereitet wird, wobei als erste Bestandteile mindestens ein Hartkäse, Kasein und/oder Kaseinate und ein technologisches Schmelzmittel verwendet werden.

4. Verfahren nach einem der Ansprüche 1 und 2, dadurch gekennzeichnet, daß die Schmelzmasse nach einer spezifischen Technologie zubereitet wird, wobei als erste Bestandteile frische Sauermilch, Kasein und/oder Kaseinate verwendet werden.

5. Verfahren nach einem der Ansprüche 1 bis 4, dadurch gekennzeichnet, daß bei der Säurebildungsbehandlung der pH-Wert auf einen Wert zwischen 4,5 bis 4,6 gesenkt wird.

6. Verfahren nach einem der Ansprüche 1 bis 5, dadurch gekennzeichnet, daß als Schimmelpilz zur Reifung Penicillium-Stämme verwendet werden.

7. Verfahren nach Anspruch 6, dadurch gekennzeichnet, daß ein Stamm des Penicillium Candidum verwendet wird.

8. Verfahren nach einem der Ansprüche 1 bis 7, dadurch gekennzeichnet, daß ein Käseblock durch das Übereinanderschichten von heißen Schmelzkäseschichten und Teilen von mindestens einem Naturkäse in einer Form gebildet wird.

9. Verfahren nach einem der Ansprüche 1 bis 8, dadurch gekennzeichnet, daß während der Reifung ein maschinelles Wenden erfolgt.

10. Verfahren nach einem der Ansprüche 1 bis 9, dadurch gekennzeichnet, daß das Produkt nach der Reifung mit Mikrowellen oder ionisierenden Strahlen behandelt wird.